(19) **Europäisches Patentamt**
**European Patent Office**
**Office européen des brevets**

(11) **EP 2 572 477 B1**

(12) **EUROPEAN PATENT SPECIFICATION**

(45) Date of publication and mention
of the grant of the patent:
**14.01.2015 Bulletin 2015/03**

(21) Application number: **11724367.5**

(22) Date of filing: **19.05.2011**

(51) Int Cl.:
**H04L 12/701** *(2013.01)*

(86) International application number:
**PCT/EP2011/002496**

(87) International publication number:
**WO 2011/144342 (24.11.2011 Gazette 2011/47)**

(54) **A METHOD AND A DEVICE FOR BULK DATA TRANSFER IN DELAY-TOLERANT NETWORKS**

VERFAHREN UND VORRICHTUNG ZUR ÜBERTRAGUNG GROSSER DATENMENGEN IN VERZÖGERUNGSTOLERANTEN NETZWERKEN

PROCÉDÉ ET DISPOSITIF POUR UN TRANSFERT DE DONNÉES DE MASSE DANS DES RÉSEAUX INSENSIBLES AUX RETARDS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.05.2010 US 347057 P**

(43) Date of publication of application:
**27.03.2013 Bulletin 2013/13**

(73) Proprietor: **Telefónica, S.A.**
**28013 Madrid (ES)**

(72) Inventors:
• **RODRIGUEZ, Pablo**
**E-08021 Barcelona (ES)**
• **CHHABRA, Parminder**
**E-08021 Barcelona (ES)**
• **ERRAMILLI, Vijay**
**E-08021 Barcelona (ES)**
• **LAOUTARIS, Nikolaos**
**E-08021 Barcelona (ES)**
• **SUNDARAM, Ravi**
**E-08021 Barcelona (ES)**

(74) Representative: **Carlos Hernando, Borja**
**Garrigues IP, S.L.P.**
**Hermosilla, 3**
**28001 Madrid (ES)**

(56) References cited:
• **DAVID HAY ET AL: "Optimal routing and scheduling for deterministic delay tolerant networks", WIRELESS ON-DEMAND NETWORK SYSTEMS AND SERVICES, 2009. WONS 2009. SIXTH INTERNATIONAL CONFERENCE ON, IEEE, PISCATAWAY, NJ, USA, 2 February 2009 (2009-02-02), pages 27-34, XP031437620, ISBN: 978-1-4244-3375-9**
• **ACHARYA H B ET AL: "Delay Tolerant Networks: A Retrospective", NEXT GENERATION MOBILE APPLICATIONS, SERVICES AND TECHNOLOGIES, 2009. NGMAST '09. THIRD INTERNATIONAL CONFERENCE ON, IEEE, PISCATAWAY, NJ, USA, 15 September 2009 (2009-09-15), pages 309-314, XP031569608, ISBN: 978-0-7695-3786-3**
• **JAIN S ET AL: "ROUTING IN A DELAY TOLERANT NETWORK", COMPUTER COMMUNICATION REVIEW, ACM, NEW YORK, NY, US, vol. 34, no. 4, 1 October 2004 (2004-10-01), pages 145-157, XP001224045, ISSN: 0146-4833, DOI: DOI: 10.1145/1030194.1015484**

**Description**

Field of the art

The present invention generally relates, in a first aspect, to a method for bulk data transfer in delay-tolerant networks, comprising managing said data transfer based on a network graph, and more particularly to a method which comprises generating said graph for modelling a dynamic network, in the form of a time-expanded graph.

A second aspect of the invention relates to a device for bulk data transfer in delay-tolerant networks with a scheduler unit implementing the method of the first aspect.

Prior State of the Art

In the last few years, there has been a renewed interest in the problem of transferring bulk data (usually Terabytes) using commercial ISPs. The need to transfer bulk data is due to various scientific (like transferring Terabytes of data from the Hadron collider in CERN) and commercial applications (like performing backups across geographically distant data centres). The key insight here is that many of the applications that would utilize bulk data are tolerant to delays. So, the data can be transferred at minimal cost while utilizing already paid for off-peak bandwidth that results from diurnal traffic patterns using store-and-forward via intermediate storage nodes.

The last decade has fundamentally altered how we distribute content and how we interact with one another and consume information. The advent of P2P services in the last decade has shown how we distribute content and quickly enable new services. The observation that a vast amount of multimedia content downloaded (or mailed via a Netflix-like service) is not consumed right away, and so, is delay-tolerant (DT) has opened the possibility of offering bulk downloads as a service that the ISPs can offer. This has meant that ISPs have had to rethink their networks beyond merely routing and forwarding packets. ISPs can enable a variety of services for a range of applications that take advantage of bulk-data transfers, both for consumers and for businesses. As an example, today, Amazon provides a service (Amazon Import/Export [2]), which allows a user to transfer large volume of data across the country through Amazon's internal network (thereby avoiding the high transit costs on the Internet). Clearly, there is a demand for such a service. The popularity of services like Netflix has meant that as a next generation service, movies may be available for download from the user's Netflix queue to an Xbox [14] or a similar device rather than via snail mail.

The case for bulk-transfer of delay-tolerant data was made in a sequence of two papers [9][10]. The general approach of modelling networks as graphs and solving the routing problem using flows has a vast literature [1]. Linear programming is also a well-studied area with well-understood polynomial-time algorithms such as the Ellipsoid Algorithm or Interior-Point Algorithms [6][14]. Both [13] and [8] are a good source on optical networks including half duplex links, and the general area of Networks. The problem of time-varying links in the context of networks has been studied earlier, in the context of delay [12] rather than throughput. In [11], the authors study networks with stochastically varying links. In this work, we deal with Networks that have time-varying links that have deterministic spare capacities that are known in advance (this is an approximation since it is well known that traffic in backbone links does not fluctuate discernibly week-to-week).

Prior art document "Optimal routing and scheduling for deterministic delay tolerant networks", by David Hay et al, refers to a nethod for bulk data transfer in delay-tolerant networks that includes modelling a delay-tolerant network as a graph, managing bulk data transfer on the basis of said graph, being said modelling performed to transform a dynamic network comprising time-varying links into a static time-expanded network graph. This prior art document assumes that the network is deterministic, i.e., that the bandwidth on every link is known for the entire future, and it further assumes a single capacity constraint for every link.

The present inventors are not aware of any proposal that studies the impact of storage and/or links costs in time-varying networks for the problem of bulk data transfer.

Description of the Invention

It is necessary to offer an alternative to the state of the art that fills the gaps found therein, particularly those referring to the lack of proposals focused on the problem of time-varying networks for bulk data transfer.

To that end, the present invention relates to a method for bulk data transfer in delay-tolerant networks, comprising modelling a delay-tolerant network as a graph and managing bulk data transfer on the basis of said graph.

Contrary to known proposals, as per the method of the first aspect of the invention, said network modelling is performed to transform a dynamic network comprising time-varying links into a static time-expanded network graph.

Other embodiments of the method of the first aspect of the invention are described with reference to appended claims 2 to 13, and in a subsequent section related to the detailed description of several embodiments, where techniques to transform any dynamic network into a static time-expanded network are described.

The method of the invention deals with the issue of effectively representing storage in time-expanded graphs. The key insight here is that just as with space-time curves [3], the time-expanded graph is a space-time representation of a spatial object (the graph). This allows representing the storage nodes in the static time-expanded graph of the original dynamic network.

A second aspect of the invention relates to a device for bulk data transfer in delay-tolerant networks, comprising a scheduler unit with processing capabilities.

The scheduler unit of the device of the second aspect of the invention implements an algorithm which processes arc costs (i.e., cost of traversing a link) and storage costs as per the method of claim 5 or claim 13 to find an optimal schedule for bulk data transfer.

For an embodiment, the device is a router or a device associated to a router, which can use the time-expanded graph to schedule data between routers (across ISPs or across PoPs and within the same PoP).

Brief Description of the Drawings

The previous and other advantages and features will be more fully understood from the following detailed description of embodiments, with reference to the attached drawings, which must be considered in an illustrative and non-limiting manner, in which:

Figure 1 schematically shows, in the form of a conventional graph, a network topology with a source node and a sink node interconnected through intermediate nodes.

Figure 2 shows a time expanded graph obtained from the graph of Figure 1 by means of the method of the first aspect of the invention, for an embodiment regarding a network with time-varying link capacities and link costs;

Figure 3 show Half-duplex links and their transformations (right view) preformed according to an embodiment of the method of the first aspect of the invention;

Figure 4 schematically shows an embodiment of the method of the first aspect of the invention regarding how node constraints of the dynamic network are represented in the time-expanded graph.

Figure 5 shows the time-expanded graph of Figure 2 with the inclusion of information regarding storage nodes with infinite storage and zero cost.

Figure 6 differs from Figure 5 in that storage nodes have time-varying capacities and costs.

Detailed Description of Several Embodiments

The present invention allows for solving the general problem of transferring bulk data over a network in polynomial-time using minimum-cost flow algorithms on a time-expanded graph of the underlying network.

The method of the invention comprises transforming any network with dynamic capacities and costs to a static time-expanded and layered network.

Next, different embodiments of the method of the first aspect of the invention are described, including those teaching how to make graph transformations for half-duplex links as well as nodes that have processing constraints.

A key feature of the solution provided by the method of the first aspect of the invention is its ability to handle nodes with storage that varies over time. According to the method of the invention, nodes with time-varying storage are considered, with storage varying over time; both in available capacity and cost of storage.

The proposed method extends to cover the case of linear costs, providing polynomial-time algorithms. With constrained storage, the optimal solutions may involve loops, i.e. the data may pass through the same node more than once on its way from the destination to the source along the optimal route.

As mentioned above, techniques for transforming any network topology with dynamic link capacities and costs into a static time-expanded network are described as per several embodiments of the method of the invention. Thus, the problem of finding an optimal schedule to transfer bulk data can be reduced to the problem of minimum cost flow on the static network for which well known solutions exist.

Said techniques are:

- Transformation techniques for any network with dynamic capacities and link costs.
- Transformation techniques for half-duplex links (that are an essential feature of fibre-optic links) as well as for nodes that may be capacity constrained.
- Transformation techniques that capture dynamic storage at nodes together with dynamic cost of storage at individual nodes.

Once one or more of the above techniques has transformed the original dynamic network into a static network expanded in time, it is easy to solve graph problem on this network in polynomial time.

Before considering the details of an algorithmic implementation of the method of the invention, the symbols used and their meanings are next explained:

A network is modelled as a directed graph $G = (V,E)$ with $n = |V|$ vertices (nodes) and $m = |E|$ directed arcs (links). Lowercase letters are used to denote the individual elements, i.e. $V = \{v_1, v_2, ... v_n\}$ and $E = \{e_1, e_2, ... e_m\}$, where each $e_k = (i, j)$ is the directed arc from $v_i$ to $v_j$. It is assumed that the capacities and costs of the links to be time varying.

Symbol r (for rate) is used to denote the capacity of a link, specifically $r_{ij}^t$ denotes the capacity of link $(i, j)$ at time t. Observe that since r is a rate (bits per hour) and time is measured in units of an hour, hence r also represents the maximum amount of data (in bits) that can be transferred in that hour t across the link $(i, j)$.

Similarly, c (for cost) is used to represent the cost for transferring data. $c_{ij}^t$ (dollars per bit) is used to denote the cost of link $(i, j)$ at time t.

Letter s is used for storage to denote the storage capacity of a node, specifically sit (in bits) denotes the storage of node i at time t.

Finally, p is used to denote the cost of storage, specifically $p_i^t$ denotes the cost of storage (in dollars per bit-hour) at node i at time t.

Time Expanded Graph:

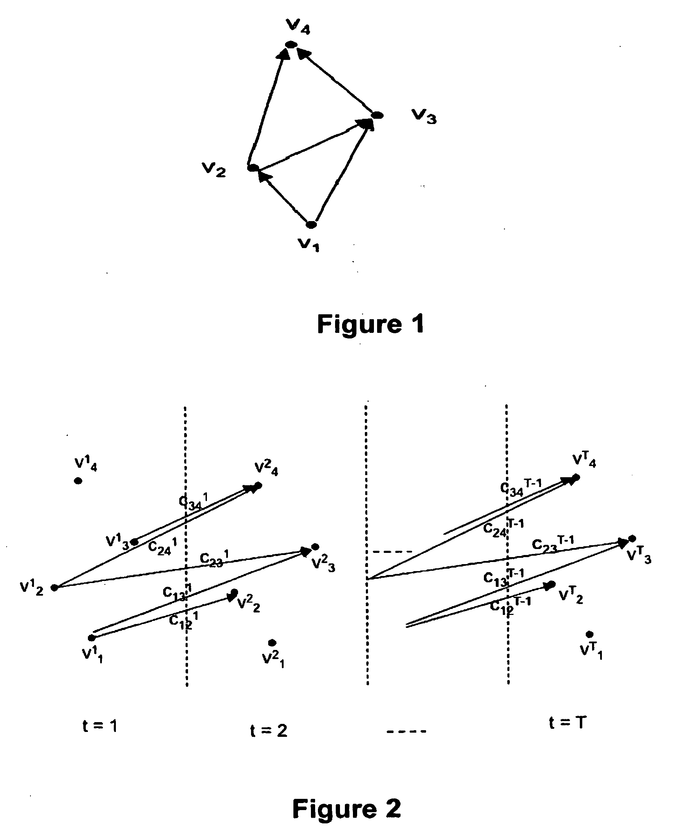

Next, how to transform a dynamic network, one with varying capacities and costs into a static network is shown. The transformation is best explained using an example. A simple network topology as shown in Figure 1 is used as an example topology with source at node $V_1$ and destination (or sink) node at $V_2$.

Given a network with time-varying link capacities and link costs the method comprises creating a time-expanded graph as follows: creating T copies of the vertex set $V^1$, $V^2$, ... $V^T$. Each $V^t$ is an independent set, i.e. there are no arcs between any two vertices of $V^t$. The arcs run between $V^t$ and $V^{t+1}$ for all $1 \leq t \leq$ T-1. For each arc $(v_i, v_j)$ T copies of the form $(v_i^t, v_j^{t+1})$ are created for all $1 \leq t \leq$ T-1, each with capacity (rate) and cost corresponding to its time slot t. This new static graph is here called time-expanded graph. Figure 2 is the time-expanded graph of the original graph from Figure 1. The time-expanded graph can be viewed as the original graph stretched out across the time dimension. Observe also that the capacities on the arcs in the time-expanded graph exactly correspond to the rate times one hour, or $r_{ij}^t$ bits.

For any pair of source-sink destinations, including multi-commodity versions, the minimum cost flow on the time expanded graph is the optimal routing scheme on the underlying network topology with dynamically varying capacities and costs. From the example of Figures 1 and 2, it is easy to see that any routing scheme on the underlying network topology can be realized in the time-expanded graph by routing the flows at time t in the network topology on the arcs with superscript t in the time expanded graph.

In Figure 2, the graph with the cost $c_{ij}^t$ associated with transferring a bit from node i to node j is annotated. So, $c_{23}^1$ is the cost of transferring a bit from node 2 to node 3 at time instance 1. Likewise, $c_{34}^1$ is the cost of transferring a bit from node 3 to node 4 at time instance 1.

Half-duplex Links:

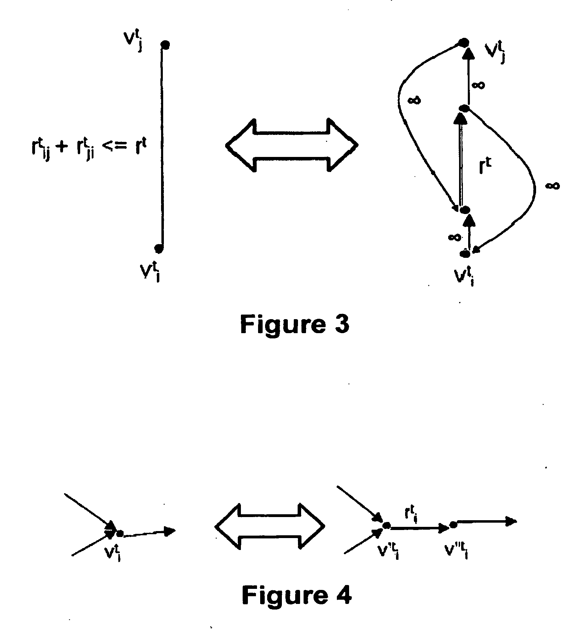

Next Figure 3 details an embodiment of the method of the invention showing that the transformation provided thereby can be extended to half-duplex links. Half-duplex links occur in fibre-optic networks. Such networks use wavelength division multiplexing (WDM) where the sum total of the frequencies in the two directions (uplink and downlink) is a fixed constant. In other words the link can be thought of as two arcs between the nodes i and j, $(i, j)$ and $(j, i)$ but with capacities summing up to a constant, i.e. $r_{ij}^t + r_{ji}^t = r^t$.

Fig. 3 represents how we can represent half-duplex links as a time-expanded graph. Half-duplex links are important as they occur in fibre-optic networks. Such networks use wavelength division multiplexing (WDM) where the sum total of the frequencies in the two directions (uplink and downlink) is a fixed constant. In other words the link can be thought of as two arcs between the nodes i and j, $(i, j)$ and $(j, i)$ but withijt + rjit = rt. It is important to be able to handle this case since fibre is the most commonly used transmission medium in long-haul networks. So we proceed as follows. What the transformation needs to preserve is the fact that bandwidth (by way of frequencies) is upper-bounded by rt, satisfying the condition above. For this, we add four directional arcs as shown in Fig. 3 (right). Each of these arcs have infinite capacity. However, any direction (uplink or downlink) will necessarily be constrained by the vertical arc in the middle, and hence by the bandwidth (rt) in the middle. That is, the middle arc is the bottleneck link.

It is important to be able to handle this case since fibre is the most commonly used transmission medium in long-haul networks. Observe from Figure 3 that the total flow from i to j and from j to i in the transformed gadget can never exceed $r^t$ because it is limited by the capacity of the vertical arc in the middle.

Node Constraints:

Figure 4 describes an embodiment of the method of the first aspect of the invention that shows how the original network graph may be transformed if a constraint is placed on the node itself.

It is important to understand the graph transformation when constraints are places on the amount of data that a node can handle.

Nodes can be constrained when they have to filter the data passing through them either due to security reasons. Such situations may be handled in the time-expanded graph as shown in Figure 4. The key idea is as follows: Give a constrained node $v_i^t$ at time t, create two nodes $v'^t_i$ and $v''^t_i$ such that all original incoming arcs connect to $v'^t_i$ and all original outgoing arcs from $v_i^t$ connect to $v''^t_i$.

The arc $(v'^1_i, v''^t_i)$ with capacity constraint $r_i^t$ and associated cost constraint $c_i^t$ (if any) is also added. So, any flow from an incoming arc to an outgoing arc is forced to go through the arc $(v'^t_i, v''^t_i)$ and is subject to the capacity and cost constraints of the node.

Storage at Nodes:

The time-expanded graphs of the embodiments described so far, in the present section, did not have any storage in the nodes. Next, storage is introduced at the nodes and the technique for constructing such time-expanded graphs is described.

The key reason for introducing storage at the nodes is that store-and-forward networks allow for the delivery of substantially larger quantities of data at lower cost.

Consider first a network with nodes that have infinite storage. The key insight in representing storage nodes as time-expanded graphs is that just as with space-time curves, the time-expanded graph is a space-time representation of a spatial object (the graph).

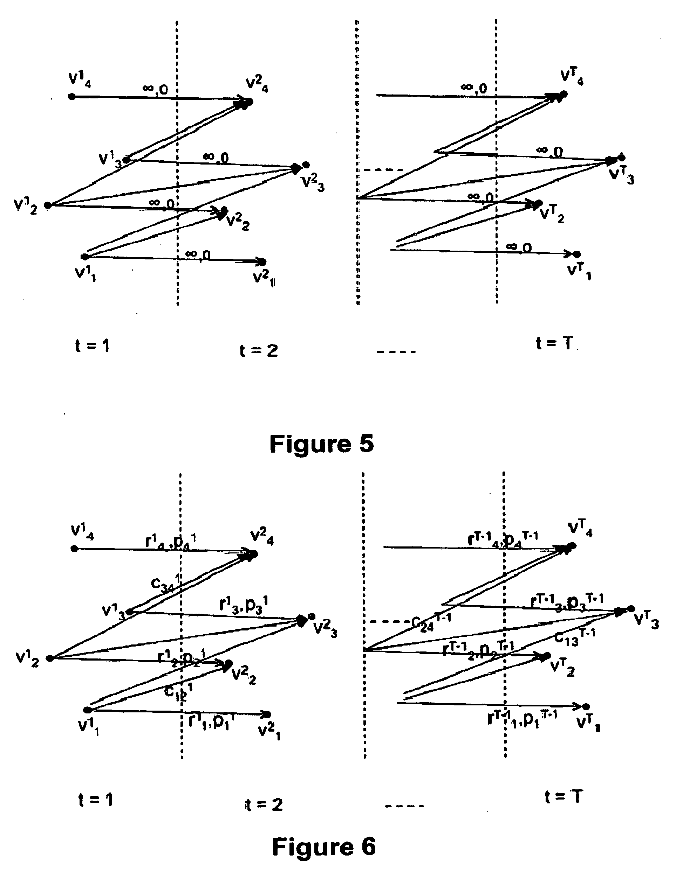

Figure 5 shows how the time-expansion can be extended to include storage nodes. Storage nodes are shown to have infinite capacity in going from one time slot to the next. All links with infinite storage and zero cost (represented by the tuple $(\infty, 0)$) represent storage at the nodes. For example, the link between $V^1_4$ and $V^2_4$ shows that the node has infinite capacity in going from timeslot t=1 to t=2 for node 4 (and similarly for the other links) at zero cost. For simplicity, the time-varying capacities for data transfer (represented as $c_{ij}^t$) on the arcs in the time-expanded graph have not been shown in Figure 5. This cost corresponds to the time varying capacity in the links of the original graph using transformations of Figure 2.

Once the above transformation is complete, it allows for an optimal scheduling problem to be solved in polynomial-time using well-known methods from Linear Programming as well as the algorithmic theory of flows.

In some scenarios, storage is charged on a flat-fee model where the user is charged for using any storage at all (up to some reasonable limit) independent of the actual amount used. This is a natural case to consider and it would be useful if we could extend our transformations so that existing flow algorithms and linear programs could be applied to this situation as well.

Storage with time-varying capacities and costs:

Finally, an embodiment of the method of the invention regarding transformations for links with time-varying capacities and costs is described with reference to Figure 6.

The general problem of storage with time-varying capacities and costs is a generalization of the previous case where infinite storage and at zero cost was considered. As before, links of the form $(v_i^t, v_i^{t+1})$ are added. This represents the amount of data stored at node $v_i$ at time t. A capacity $r_i^t$ with such a link and with a cost $p_i^t$ at time t is associated in the graph.

Figure 6 is also annotated with cost $c_{ij}^t$ for the link (i,j) at time t for a few links for clarity. A direct consequence of reducing a network graph to a minimum-cost flow problem (when constrained storage with linear costs is considered) is that loops emerge in the optimal data routes.

Next, a simple example of the application of the method of the invention, for the embodiment of Figure 6, is briefly described:

Consider data at a node $v_1$ that wants to go to node $v_3$. $v_1$ has high costs of storage and high cost of transit to $v_3$ except in time slot 4 when the transit cost is low. Then, if there is a node $v_2$ with low transit costs to and from $v_1$ and with low storage costs as well, then the optimal route will involve a cycle where the data moves from $v_1$ to $v_2$, then stays there for 1 time slot, comes back to $v_1$ in time slot 3 and goes to $v_3$ in time slot 4.

Since data volume in a link does not change appreciably from week-to-week, data volume of the previous week can be used to serve as an estimate for traffic for the current week. The time-expanded graph obtained using the techniques presented in this section can be used by a router to schedule data between routers (across ISPs or across PoPs and within the same PoP). To get an optimal scheduling of data at the router, minimum cost-flow problem can be used using either well-known graph algorithms or linear programming.

A person skilled in the art could introduce changes and modifications in the embodiments described without departing from the scope of the invention as it is defined in the attached claims.

Advantages of the Invention:

The invention provides the following advantages:

- It provides a general method for transforming any network with dynamic capacities and costs to a static time-expanded network. Thus, finding an optimal schedule for transfer of bulk data can be reduced to a minimum-cost flow problem, which can be solved in polynomial-time using methods from either linear programming as well as graph algorithms.
- Storage nodes can be modelled via graph transformations that capture their capacities and costs.
- This scheme of constructing time-expanded graphs may be implemented at a router. A scheduler at the router can move data between the source and destination.

Transforming any underlying network into a time-expanded graphallows for the possibility of executing graph algorithms on any network using well know techniques (via linear programming techniques or graph algorithms) and in polynomial time while preserving the properties of the underlying structure.

Acronyms, abbreviations and terminology:

WDM    It is a technology that multiplexes several optical signals on a single optical fibre using different wavelengths.

P2P    Peer-to-Peer, e.g. bittorrent.

PoP    Point of Presence.

ISP    Internet Service Provider, e.g., Telefonica, ATT, Comcast, Deutsch Telekom.

QoS    Quality of Service. A traffic engineering term that refers to the ability to provide certain guarantees in bit rate, delay, loss etc.

Delay-Tolerant traffic: All traffic may be divided into two kinds, elastic and inelastic. Elastic or delay-tolerant traffic includes P2P downloads, bulk-data transfer, that is not necessarily consumed immediately upon download. Inelastic traffic (or non-delay tolerant traffic is traffic consumed immediately upon download, e.g. web browsing, emails, short youtube videos etc.

Peak-hour: Traffic during normal business hours. Actual hours may vary slightly from country to country.

Off-peak hour: Traffic during late evenings, night and early morning. Traffic is often low during these hours when compared to traffic during peak-hours.

Graph: A graph is a collection of vertices (or nodes) and edges that connect pairs of vertices. In this work, routers are modelled as vertices. A network link between two routers is an edge. Together, the vertex set V and edge set E form a graph G.

References:

[1] Ahuja, R., Magnanti, T., and Orlin, J., "Network Flows: Theory, Algorithms and Applications", Prentice-Hall, 1993.

[2] Amazon Import/Export. At http://aws.amazon.com/importexport/

[3] Church. K, Grenberg, A, Hamilton, J. "Delivering Embarissingly Distributed Cloud Services. Proceedings of ACM HotNets - VIII.

[4] Feynman, R. "The Feynman Lectures in Physics", Addison-Wesley, 1970.

[5] Garey, M., and Johnson, D., "Computers and Intractability: A Guide to the Theory of Incompleteness", Freeman, 1970.

[6] Goldberg, A. Network optimization library. Available at http://www.avglab.com/andrew/soft.html

[7] Grotschel, M., Lovasz, L., and Schrijver, A., "Geometric Algorithms and Combinatorial Optimization" Springer-Verlag, 1988.

[8] Kurose, J., and Ross, K., Computer Networking: A Top-Down Approach", Addison-Wesley, 2009.

[9] Laoutaris, N., and Rodriguez, P., "Good things come to those who (can) wait or How to handle delay tolerant traffic and make peace on the Internet", Proceedings of ACM HotNets - VIII.

[10] Laoutaris, N., Smaragdakis, G., Rodriguez, P., and Sundaram , R., "Delay tolerant bulk data transfers on the Internet", Proceedings of ACM SIGMETRICS'09, pp. 229-238.

[11] Orda, A., Rom, R., and Sidi, M., "Minimum-delay routing in stochastic networks", IEEE Transactions of Networking, 1, pp. 187-198, 1993.

[12] Orda, A., and Rom, R., "Shortest-path and Minimum-delay Algorithms in Networks with Time-dependent Edge-Lengths," Journal of the ACM, 37, pp. 607-625, 1990

[13] Ramaswami, R., and Sivarajan, K., "Optical Networks: A Practical Perspective", Morgan-Kaufmann, 2001.

[14] Schrijver, A., "Theory of Linear and Integer Programming", Wiley, 1998.

[15] Xbox live and Netflix. At http://www.xbox.com/en-US/live/netflix/default.htm

## Claims

1. A method for bulk data transfer in delay-tolerant networks, comprising modelling a delay-tolerant network as a graph and managing bulk data transfer on the basis of said graph, wherein said modelling is performed to transform a dynamic network comprising time-varying links into a static time-expanded network graph **characterised in that** said dynamic network comprises at least a source node ($v_1$) a destination node ($v_4$), intermediate nodes ($v_2$, $v_3$), and directed arcs linking said nodes ($v_1$, $v_2$, $v_3$, $v_4$), the method comprising generating said static time-expanded network graph by creating:

   T copies $\left( v_1^1 , v_2^1, v_3^1, v_4^1 \ldots v_1^T, v_2^T, v_3^T, v_4^T \right)$ of each of said nodes ($v_1$, $v_2$, $v_3$, $v_4$);

   - T copies of each of said arcs connecting different and consecutive of said T nodes copies $\left( v_1^1 , v_2^1, v_3^1, v_4^1 \ldots v_1^T, v_2^T, v_3^T, v_4^T \right)$ not referring to the same node, and associating each arc with a capacity and/or cost $\left( c_{12}^1 , c_{13}^1, c_{23}^1, c_{24}^1, c_{34}^1 \ldots c_{12}^{T-1} , c_{13}^{T-1}, c_{23}^{T-1}, c_{24}^{T-1}, c_{34}^{T-1} \right)$;

   wherein each of said T copies correspond to a time slot (t) of the static time-expanded network graph.

2. A method as per claim 1, further comprising representing storage nodes, including their storage capacity, in said static time-expanded network graph.

3. A method as per claim 1 or 2, wherein said available capacities on time-varying links are deterministic and known in advance from recent, historic data of link utilization.

4. A method as per any of the previous claims, comprising using said static time-expanded network graph to schedule said bulk data transfer between nodes.

5. A method as per claim 4, wherein said dynamic network includes time-varying costs associated to said time-varying links, the method comprising finding an optimal schedule for said bulk data transfer by solving a problem of minimum cost flow on the static time-expanded network graph.

6. A method as per claim 5 when depending on claim 2, wherein said dynamic network includes time-varying costs associated to storage at said storage nodes.

7. A method as per claim 1, wherein when said dynamic network includes half-duplex links, the method comprises representing each link between two nodes ($v_i$, $v_j$) by means of two arcs with respective capacities $(r_{ij}^t, r_{ji}^t)$ summing up to a constant ($r^t$).

8. A method as per claim 1, wherein when said dynamic network includes a constrained node $(v_i^t)$, the method comprises representing such a node for each time slot t, as an input node ($v_i^t$) and an output node ($v2_i^t$) linked by an arc with associated capacity constraint ($r_i^t$) and/or cost constraint ($c_i^t$), where all original incoming arcs connect to said input node ($v_i^t$) and all original outgoing arcs connect to said output node ($v2_i^t$).

9. A method as per claim 1 comprising representing storage nodes in said static time-expanded network graph with their storage capacity, by connecting, via respective arcs, different and consecutive of said T nodes copies $(v_1^1, v_2^1, v_3^1, v_4^1 \dots v_1^T, v_2^T, v_3^T, v_4^T)$ referring to the same node in different time slots (t), and associating each arc with a storage capacity ($r_i^t$) and a storage cost ($p_i^t$).

10. A method as per claim 9, wherein said storage capacity ($r_i^t$) is infinite and said storage cost ($p_i^t$) is zero.

11. A method as per claim 9 when depending on claim 5, wherein said storage capacity ($r_i^t$) and said storage cost ($p_i^t$) are time-varying.

12. A method as per claim 11, comprising finding said optimal schedule by solving said problem of minimum cost flow taking into account both costs: the one associated to arcs ($c_{ij}^t$) for traversing the link and the cost associated to storage ($p_i^t$).

13. A device for bulk data transfer in delay-tolerant networks, comprising a scheduler unit with processing capabilities, wherein the device is **characterised in that** said scheduler unit implements an algorithm which processes arc costs ($c_{ij}^t$) and storage costs ($p_i^t$) as per the method of claim 5 or claim 12 to find an optimal schedule for bulk data transfer.

14. A device as per claim 13, wherein said scheduler unit is a router or a device associated to a router."

**Patentansprüche**

1. Verfahren zur Übertragung von großen Datenmengen in verzögerungstoleranten Netzwerken, umfassend das Modellieren eines verzögerungstoleranten Netzwerks als eine Grafik und das Verwalten einer Übertragung von großen Datenmengen auf Grundlage der genannten Grafik, wobei das genannte Modellieren ausgeführt wird, um ein dynamisches Netzwerk, welches zeitlich variierende Verknüpfungen umfasst, in eine statische, zeitgedehnte Netzwerkgrafik umzuwandeln,

**dadurch gekennzeichnet, dass**

das genannte dynamische Netzwerk zumindest einen Quellknoten ($v_1$), einen Zielknoten ($v_4$), Zwischenknoten ($v_2$, $v_3$) und adressierte Bögen, welche die genannten Knoten ($v_1$, $v_2$, $v_3$, v4) verknüpfen, umfasst, wobei das Verfahren das Erzeugen der genannten statischen, zeitgedehnten Netzwerkgrafik durch das Erstellen folgender Elemente umfasst:

- T-Kopien $\left( v\frac{1}{1}, v\frac{1}{2}, v\frac{1}{3}, v\frac{1}{4}, \dots v\frac{T}{1}, v\frac{T}{2}, v\frac{T}{3}, v\frac{T}{4} \right)$ jedes der genannten Knoten (v1, v2, v3, v4);

- T-Kopien jedes der genannten Bögen, welche verschiedene und aufeinanderfolgende der genannten T-Kno-

tenkopien $\left( v\frac{1}{1} , v\frac{1}{2} , v\frac{1}{3} , v\frac{1}{4} , \ldots v\frac{T}{1} , v\frac{T}{2} , v\frac{T}{3} , v\frac{T}{4} \right)$ verknüpfen, welche sich nicht auf denselben Knoten beziehen, und welche jeden Bogen mit einer Kapazität und/oder Kosten $\left( c\frac{1}{12} , c\frac{1}{13} , c\frac{1}{23} , c\frac{1}{24} , c\frac{1}{34} \ldots c\frac{T-1}{12} , c\frac{T-1}{13} , c\frac{T-1}{23} , c\frac{T-1}{24} , c\frac{T-1}{34} \right)$ verknüpfen;

wobei jede der genannten T-Kopien einem Zeitschlitz (t) der statischen, zeitgedehnten Netzwerkgrafik entspricht.

**2.** Verfahren nach Anspruch 1, weiterhin umfassend das Darstellen von Speicherknoten einschließlich ihrer Speicherkapazität in der genannten statischen, zeitgedehnten Netzwerkgrafik.

**3.** Verfahren nach Anspruch 1 oder 2, wobei die genannten verfügbaren Kapazitäten in zeitlich variierenden Verknüpfungen deterministisch und vorab aus letzten historischen Daten einer Verknüpfungsnutzung bekannt sind.

**4.** Verfahren nach einem der vorherigen Ansprüche, umfassend das Verwenden der genannten statischen, zeitgedehnten Grafik, um die genannte Übertragung von großen Datenmengen zwischen Knoten zeitlich festzulegen.

**5.** Verfahren nach Anspruch 4, wobei das genannte dynamische Netzwerk zeitlich variierende Kosten, welche mit den genannten zeitlich variierenden Verknüpfungen verbunden sind, beinhaltet, wobei das Verfahren das Finden einer optimalen Zeitplanung für die genannte Übertragung von großen Datenmengen durch das Lösen eines Problems eines Minimalkostenflusses in der statischen, zeitgedehnten Netzwerkgrafik umfasst.

**6.** Verfahren nach Anspruch 5, wenn dieser von Anspruch 2 abhängt, wobei das genannte dynamische Netzwerk zeitlich variierende Kosten beinhaltet, welche mit dem Speichern in den genannten Speicherknoten verbunden sind.

**7.** Verfahren nach Anspruch 1, wobei das Verfahren das Darstellen jeder Verknüpfung zwischen zwei Knoten ($v_i$, $v_i$) durch zwei Bögen mit jeweiligen Kapazitäten $\left( r\frac{T}{ij} , r\frac{T}{ji} \right)$, welche in der Summe eine Konstante ($r^t$) ergeben, umfasst, wenn das genannte dynamische Netzwerk Halbduplex-Verknüpfungen beinhaltet.

**8.** Verfahren nach Anspruch 1, wobei das Verfahren, wenn das genannte dynamische Netzwerk einen beschränkten Knoten $\left( v\frac{T}{1} \right)$ beinhaltet, das Darstellen eines solchen Knotens für jeden Zeitschlitz t als einen Eingangsknoten ($v_i^t$) und einen Ausgangsknoten ($v2i^t$), welche durch einen Bogen mit einer verbundenen Kapazitätsgrenze ($r_i^t$) und/oder Kostengrenze ($c_i^t$) verknüpft sind, umfasst, wobei sämtliche ursprünglichen eingehenden Bögen mit dem genannten Eingangsknoten ($v_i^t$) verbunden sind und sämtliche ursprünglichen ausgehenden Bögen mit dem genannten Ausgangsknoten ($v2_i^t$) verbunden sind.

**9.** Verfahren nach Anspruch 1, wenn dieser von Anspruch 2 abhängt, umfassend das Darstellen von Speicherknoten in der genannten statischen, zeitgedehnten Netzwerkgrafik mit ihrer Speicherkapazität durch ein Verbinden über jeweilige Bögen von verschiedenen und aufeinanderfolgenden der genannten T-Knotenkopien $\left( v\frac{1}{1} , v\frac{1}{2} , v\frac{1}{3} , v\frac{1}{4} , \ldots v\frac{T}{1} , v\frac{T}{2} , v\frac{T}{3} , v\frac{T}{4} \right)$, welche sich auf denselben Knoten in unterschiedlichen Zeitschlitzen (t) beziehen, und das Verknüpfen jedes Bogens mit einer Speicherkapazität ($r_i^t$) und Speicherkosten ($p_i^t$).

**10.** Verfahren nach Anspruch 9, wobei die genannte Speicherkapazität ($r_i^t$) unendlich ist und die genannten Speicherkosten ($p_i^t$) Null betragen.

**11.** Verfahren nach Anspruch 9, wenn dieser von Anspruch 5 abhängt, wobei die genannte Speicherkapazität ($r_i^t$) und

die genannten Speicherkosten ($p_i^t$) zeitlich variieren.

12. Verfahren nach Anspruch 11, umfassend das Finden der genannten optimalen Zeitplanung durch das Lösen des genannten Problems eines Minimalkostenflusses unter Berücksichtigung beider Kosten: derjenigen, die mit den Bögen ($c_{ij}^t$) zum Durchqueren der Verknüpfung verbunden sind, und der Kosten, die mit dem Speichern ($p_i^t$) verbunden sind.

13. Vorrichtung zur Übertragung von großen Datenmengen in verzögerungstoleranten Netzwerken, umfassend eine Zeitplanungseinheit mit Verarbeitungsfähigkeiten, wobei die Vorrichtung **dadurch gekennzeichnet ist, dass** die genannte Zeitplanungseinheit einen Algorithmus implementiert, welcher die Bogenkosten ($c_{ij}^t$) und Speicherkosten ($p_i^t$) gemäß Anspruch 5 oder Anspruch 13 verarbeitet, um eine optimale Zeitplanung für die Übertragung von großen Datenmengen zu finden.

14. Vorrichtung nach Anspruch 13, wobei die genannte Zeitplanungseinheit ein Router oder eine mit einem Router verknüpfte Vorrichtung ist.

## Revendications

1. Un procédé pour le transfert de données en masse dans des réseaux insensibles aux retards, comprenant la modélisation d'un réseau insensible au retard en un graphe et la gestion du transfert de données en masse sur la base dudit graphe, dans lequel ladite modélisation est opérée pour transformer un réseau dynamique comprenant des liaisons temporaires en un graphe de réseau statique développé dans le temps **caractérisé en ce que** :

   ledit réseau dynamique comprend au moins un noeud source ($v_1$), un noeud de destination ($v_4$), des noeuds intermédiaires ($v_2$,$v_3$), et des arcs orientés reliant lesdits noeuds ($v_1$, $v_2$,$v_3$, $v_4$), le procédé comprenant la génération dudit graphe de réseau statique développé dans le temps en créant :

   - des copies T $\left(v_{1,\_\_}^1 \; v_2^1, v1_3^1, v_4^1 \ldots v_1^T, v_2^T, v_3^T, v_4^T\right)$ de chacun desdits noeuds ($v_1$,$v_2$,$v_3$,$v_4$);

   - des copies T de chacun desdits arcs connectant lesdites copies, différentes et consécutives, des noeuds T $\left(v_1^1, \; v_2^1, v_3^1, v_4^1 \ldots v_1^T, v_2^T, v_3^T, v_4^T\right)$ ne faisant pas référence au même noeud, et en associant chaque arc à une capacité et/ou un coût $\left(c_{12}^1, \; , c_{13}^1, c_{23}^1, c_{24}^1, c_{34}^1 \ldots c_{12}^{T-1}, \_c_{13}^{T-1}, c_{23}^{T-1}, c_{24}^{T-1}, c_{34}^{T-1}\right)$;

   dans lequel chacune desdites copies T correspond à un laps de temps (t) du graphe de réseau statique développé dans le temps.

2. Un procédé selon la revendication 1, comprenant en outre la représentation de noeuds de stockage, incluant leur capacité de stockage, dans ledit graphe statique développé dans le temps.

3. Un procédé selon les revendications 1 ou 2, dans lequel lesdites capacités disponibles sur des liaisons temporaires sont déterministes et connues préalablement à partir des données d'historique récentes de l'utilisation de la liaison.

4. Un procédé selon l'une quelconque des revendications précédentes, comprenant l'utilisation dudit graphe de réseau statique développé dans le temps pour planifier ledit transfert de données en masse entre les noeuds.

5. Un procédé selon la revendication 4, dans lequel ledit réseau dynamique inclut des coûts temporaires associés auxdites liaisons temporaires, le procédé comprenant la découverte d'une planification optimale pour ledit transfert de données en masse en résolvant un problème de flux minimum de coût sur le graphe de réseau statique développé dans le temps.

6. Un procédé selon la revendication 5 lorsqu'il dépend de la revendication 2, dans lequel ledit réseau dynamique inclut des coûts temporaires associés au stockage dans lesdits noeuds de stockage.

7. Un procédé selon la revendication 1, dans lequel lorsque ledit réseau dynamique inclut des liaisons half-duplex, le procédé comprend la représentation de chaque liaison entre deux noeuds ($v_i$, $v_j$) au moyen de deux arcs avec des capacités respectives ($r_{ij}^t$, $r_{ji}^t$) (s'additionnant à une constante ($_r^t$)).

8. Un procédé selon la revendication 1, dans lequel ledit réseau dynamique inclut un noeud de contrainte $\left(v_1^t\right)$, le procédé comprend la représentation d'un tel noeud pour chaque laps de temps t, comme un noeud d'entrée $\left(v\mathscr{C}_i^t\right)$

et un noeud de sortie $\left(\mathrm{v}^2{}_i{}^t\right)$ reliés par un arc avec une contrainte de capacité associée $\left(r_i^t\right)$ et/ou une contrainte de coût $\left(c_i^t\right)$, où tous les arcs entrants d'origine sont connectés audit noeud d'entrée $\left(v\!\mathcal{C}_i^t\right)$ et tous les arcs de sortie d'origine sont connectés audit noeud sortant $\left(\mathrm{v}^2{}_i{}^t\right)$.

9. Un procédé selon la revendication 1 lorsqu'il dépend de la revendication 2, comprenant la représentation de noeuds de stockage dans ledit graphe de réseau statique développé dans le temps avec leur capacité de stockage, en connectant, par le biais d'arcs respectifs, lesdites copies, différentes et consécutives, des noeuds $\left(v_1^1,\ v_2^1, v_3^1, v_4^1 \ldots v_1^T, v_2^T, v_3^T, v_4^T\right)$, faisant référence au même noeud dans des laps de temps (t) différents, et en associant chaque arc à une capacité de stockage $\left(r_i^t\right)$ et un coût de stockage $\left(p_i^t\right)$.

10. Un procédé selon la revendication 9, dans lequel ladite capacité de stockage $\left(r_i^t\right)$ est infinie et ledit coût de stockage $\left(p_i^t\right)$ est de zéro.

11. Un procédé selon la revendication 9 lorsqu'il dépend de la revendication 5, dans lequel ladite capacité de stockage $\left(r_i^t\right)$ et ledit coût de stockage $\left(p_i^t\right)$ sont temporaires.

12. Un procédé selon la revendication 11, comprenant la découverte de ladite planification optimale en résolvant ledit problème de flux minimum de coût en prenant en considération les deux coûts : celui qui est associé aux arcs $\left(c_{ij}^t\right)$ pour traverser la liaison et le coût associé au stockage $\left(p_i^t\right)$.

13. Un dispositif pour le transfert de données en masse dans des réseaux insensibles aux retards, comprenant une unité de planification avec des capacités de traitement, dans lequel le dispositif est **caractérisé en ce que** ladite unité de planification met en oeuvre un algorithme qui traite les coûts d'arc $\left(c_{ij}^t\right)$ et les coûts de stockage $\left(p_i^t\right)$ selon le procédé de la revendication 5 ou la revendication 13 pour découvrir une planification optimale pour un transfert de données en masse.

14. Un dispositif selon la revendication 13, dans lequel ladite unité de planification est un routeur ou un dispositif associé à un routeur.

# Figure 1

t = 1          t = 2      ----          t = T

# Figure 2

$$r^t_{ij} + r^t_{ji} <= r^t$$

**Figure 3**

**Figure 4**

**Figure 5**

**Figure 6**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **DAVID HAY.** *Optimal routing and scheduling for deterministic delay tolerant networks*
- **AHUJA, R. ; MAGNANTI, T. ; ORLIN, J.** Network Flows: Theory, Algorithms and Applications. Prentice-Hall, 1993
- *Amazon Import/Export, http://aws.amazon.com/importexport*
- **CHURCH. K ; GRENBERG, A ; HAMILTON, J.** Delivering Embarissingly Distributed Cloud Services. *Proceedings of ACM HotNets - VIII*
- **FEYNMAN, R.** The Feynman Lectures in Physics. Addison-Wesley, 1970
- **GAREY, M. ; JOHNSON, D.** Computers and Intractability: A Guide to the Theory of Incompleteness. Freeman, 1970
- **GOLDBERG, A.** *Network optimization library, http://www.avglab.com/andrew/soft.html*
- **GROTSCHEL, M. ; LOVASZ, L. ; SCHRIJVER, A.** Geometric Algorithms and Combinatorial Optimization. Springer-Verlag, 1988
- **KUROSE, J. ; ROSS, K.** Computer Networking: A Top-Down Approach. Addison-Wesley, 2009
- **LAOUTARIS, N. ; RODRIGUEZ, P.** Good things come to those who (can) wait or How to handle delay tolerant traffic and make peace on the Internet. *Proceedings of ACM HotNets - VIII*
- **LAOUTARIS, N. ; SMARAGDAKIS, G. ; RODRIGUEZ, P. ; SUNDARAM , R.** Delay tolerant bulk data transfers on the Internet. *Proceedings of ACM SIGMETRICS'09,* 2009, 229-238
- **ORDA, A. ; ROM, R. ; SIDI, M.** Minimum-delay routing in stochastic networks. *IEEE Transactions of Networking,* 1993, vol. 1, 187-198
- **ORDA, A. ; ROM, R.** Shortest-path and Minimum-delay Algorithms in Networks with Time-dependent Edge-Lengths. *Journal of the ACM,* 1990, vol. 37, 607-625
- **RAMASWAMI, R. ; SIVARAJAN, K.** Optical Networks: A Practical Perspective. Morgan-Kaufmann, 2001
- **SCHRIJVER, A.** Theory of Linear and Integer Programming. Wiley, 1998
- *Xbox live and Netflix, http://www.xbox.com/en-US/live/netflix/default.htm*